# FASCICULE DE BREVET EUROPEEN

(11) **EP 2 262 637 B1**
(45) Date de publication et mention de la délivrance du brevet: **09.05.2012**
(21) Numéro de dépôt: 09729971.3
(22) Date de dépôt: 24.03.2009
(51) Int. Cl.: B29C 70/46, B29C 70/54, B29B 11/04, B29B 11/12, B29C 33/10, B29C 33/30

(54) **PROCEDE DE FABRICATION D'UN FLAN EN MATERIAU COMPOSITE THERMOPLASTIQUE, OUTILLAGE DE FABRICATION ASSOCIE ET APPLICATION DU PROCEDE A LA REALISATION DE PIECES DE STRUCTURE D'AERONEF**
VERFAHREN ZUR HERSTELLUNG EINES ROHLINGS AUS EINEM THERMOPLASTISCHEN VERBUNDSTOFF, ENTSPRECHENDES HERSTELLUNGSWERKZEUG UND ANWENDUNG DES VERFAHRENS AUF DIE HERSTELLUNG VON FLUGZEUGSTRUKTURTEILEN
METHOD FOR MANUFACTURING A BLANK MADE OF A THERMOPLASTIC COMPOSITE, ASSOCIATED MANUFACTURING TOOL AND APPLICATION OF THE METHOD TO THE PRODUCTION OF STRUCTURAL AIRCRAFT PARTS

(30) Priorité: 27.03.2008 FR 0851979
(43) Date de publication de la demande: 22.12.2010
(73) Titulaire: AIRBUS OPERATIONS, 31060 Toulouse (FR)
(72) Inventeur: BOUVET, David, 44780 Missillac (FR); KURTZ, Didier, 44210 Pornic (FR)
(74) Mandataire: Ilgart, Jean-Christophe
(86) Numéro de dépôt international: PCT/FR2009/050502
(87) Numéro de publication internationale: WO 2009/125122

(56) Documents cités:
- WO-A-90/11185
- GB-A- 2 332 872
- JP-A- 2 162 017
- US-A- 5 344 602
- US-A1- 2004 032 058

## Description

### DOMAINE TECHNIQUE ET ART ANTÉRIEUR

La présente invention se rapporte de façon générale à un procédé de fabrication d'un panneau ou flan en matériau composite thermoplastique, en particulier en matériau composite thermoplastique renforcés par des fibres continues. A titre indicatif, il peut en effet s'agir de composites à matrice thermoplastique à base de résine PPS ou PEI à renfort fibreux de carbone ou de verre se présentant sous forme de tissu.

L'invention se rapporte préférentiellement à un procédé de fabrication de plaques ou flans d'une épaisseur comprise entre environ 1 et 8 mm, telles que celles habituellement rencontrées dans le domaine aéronautique et destinées à être mises en forme, lors d'une étape de fabrication ultérieure, par formage sous presse, par des procédés de type poinçon-matrice tel que décrit dans EP0584017 ou des procédés d'estampage, ne nécessitant pas d'opérations de détourage supplémentaire.

A ce titre, la mise en oeuvre de l'invention conduit à l'obtention d'une plaque présentant des caractéristiques de planéité, d'état de surface, de santé matière et de contour qui la rendent apte à être mise en oeuvre en l'état ou après une opération de formage pour la constitution de pièces constituant des éléments de structure d'aéronef.

Les procédés classiques de fabrication d'un flan en matériau composite consistent globalement à mettre en oeuvre deux étapes successives, à savoir une étape de drapage suivie d'une étape de consolidation, également dénommée étape de compactage.

L'étape de drapage consiste, pour les applications aéronautiques, à réaliser un empilement de tissus de fibres pré-imprégnées de résine, dans le but d'obtenir une pluralité de couches ou plis superposés dans une direction d'empilement.

L'étape de consolidation de l'empilement consiste quant à elle par comprimer l'empilement à l'aide d'une plaque de compactage agencée au-dessus de l'empilement. Cette plaque de compactage permet en effet, par l'intermédiaire de l'application d'une pression, de compacter dans la direction d'empilement l'ensemble constitué par la superposition des tissus de fibres pré-imprégnées, et simultanément d'évacuer l'air et les gaz présents dans l'empilement, de sorte que le flan obtenu présente un taux de porosité acceptable (inférieur à 5 %). D'autre part, cette étape de consolidation de l'empilement s'effectue en appliquant un chauffage à ce dernier afin de le porter à la température requise pour obtenir la fusion de la résine pré-imprégnée sur les fibres, et donc dans le but d'obtenir un élément final compact et d'un seul tenant.

Un tel procédé est couramment mis en oeuvre par l'intermédiaire d'un autoclave, qui permet à la fois d'appliquer la pression extérieure requise pour le compactage, le vide dans la zone de l'empilement pour en faciliter le dégazage et, finalement, de porter le tout à la température requise. Un tel compactage réalisé dans un autoclave garantit :
- une répartition uniforme de la pression de compactage,
- un dégazage efficace ( pression externe + vide).

Les panneaux ainsi obtenus sont ensuite découpés en panoplies de flans, par exemple par découpe au jet d'eau abrasif, les flans étant ensuite mis en forme par des procédés de formage tels que l'estampage.

Les autoclaves sont des moyens spécifiques et chers. Ils se présentent ainsi souvent comme des moyens uniques dans un atelier ou une usine de fabrication et constituent par suite des points d'étranglement des flux de fabrication. Par ailleurs, du fait de leur conception (application de la pression extérieure à l'empilement par la pression de gaz à l'intérieur de l'autoclave, nécessité de chauffer un volume important de ce gaz dans l'enceinte), leur mise en oeuvre est relativement longue (des heures).

L'opération de découpe du panneau produit des chutes qui peuvent atteindre près de 30% du poids du panneau initial, ce qui est économiquement désavantageux, particulièrement pour des matériaux de coût élevé, tels que ceux utilisés en construction aéronautique.

Ainsi, dans le cas de petites pièces dont la surface est inférieure à 3 m², et en particulier comprises entre 0,1 et 0,5 m², il peut être avantageux de réaliser cette étape de consolidation sous presse, afin de réduire le temps de cycle. Cela présente en outre l'avantage, dans le cas d'une usine ou d'un atelier mettant en oeuvre ce type de matériau par formage, d'utiliser le même type de moyens (presses) utilisés pour le formage, procurant ainsi une flexibilité accrue de gestion de la production.

La difficulté de la consolidation sous presse réside dans la possibilité d'obtention des caractéristiques de planéité et d'état de surface des plaques en même temps qu'une santé matière (absence de porosités ou de vide) acceptables pour des applications de type aéronautique.

On connaît du document JP02162017A un procédé de compactage permettant de limiter une expulsion excessive de résine de l'empilement au cours de la mise en pression. Le procédé utilise à cette fin les effets combinés du vide à l'intérieur d'une chambre de compactage délimitée par une vessie souple, la mise sous pression de l'empilement par une plaque de pressage (cale plate) et la limitation des flux de résine par des cales de tablage.

Ce type de procédé, combinant les effets du vide et de la mise sous pression permet relativement facilement d'obtenir un dégazage optimal (par l'effet du vide) avant ou simultanément au compactage (pressage). La présence de cales de tablage permet de limiter les phénomènes d'essorage à des effets de bords. En d'autres termes, les porosités subsistantes dans le matériau sont présentes uniquement sur une largeur de quelques dizaines de mm (typiquement entre 30 et 50 mm) répartie sur le bord des plaques ainsi compactées. Ces zones poreuses sont éliminées lors d'opérations de détourage ultérieures.

Dans le cas du procédé de compactage sous une presse, décrit ci-dessus, et qui s'applique préférentiellement à la réalisation de flans de surface réduite, une telle zone affectée par l'essorage, fût-elle située en bord de flan est généralement inacceptable, car entraînant un surcoût de matière important en regard de la surface utile de la pièce. Le surcoût en question provient à la fois du coût de la matière et d'autre part du coût du détourage nécessaire avant estampage. Ceci est particulièrement sensible pour les applications de type aéronautique mettant en oeuvre des matières premières (tissus imprégnés) d'un coût particulièrement élevé.

Par ailleurs, la mise en oeuvre du procédé « sous presse » nécessite d'atteindre des pressions élevées pour assurer une expulsion efficace de l'air et des gaz contenus dans l'empilement sans pour autant expulser la résine (essorage).

Le brevet WO 90/11185 divulgue un procédé de fabrication de pièces en matériau composite thermoplastique à partir d'un empilement de tissus de fibres continues pré imprégné d'un résine thermoplastique, dans lequel l'empilement est mis en sandwich entre deux plaques de pression elles-mêmes mises en sandwich entre deux couches de toile en fibres de verre, le tout étant placé dans un sac sous vide de type Kapton®.

D'autre part, US 2004/0032058 décrit un actillage de la coulée comprenant un marbre, une plaque de compactage, une partie intermédiaire evidée et au moins un canal débouchent ménagé dans la plaque de compactage.

### EXPOSÉ DE L'INVENTION

L'invention a donc pour but de proposer, à moindre cout et à l'aide de moyens usuels, un procédé de fabrication de flans en matériau composite à fibres continues et résine thermoplastique, à partir d'un empilement de tissus pré-imprégnés de résine thermoplastique.

Pour ce faire, l'invention concerne un procédé de fabrication d'un flan en matériau composite thermoplastique pour une opération de formage ultérieure dans lequel on réalise les étapes suivantes :
a) on enveloppe un empilement de tissus de fibres continues pré-imprégné d'une résine thermoplastique, avec un film lisse en laissant au moins une ouverture (O),
b) on dispose, à la périphérie d'un marbre, des cales de tablage, et on place l'empilement de tissus sur le marbre de manière à mettre en contact le film enveloppant l'empilement avec les cales de tablage,
c) on place une plaque de compactage, au dessus de l'empilement de tissus, enveloppé du film et placé sur le marbre,
d) on applique un cycle de pression et de température, par pression sur le dessus de la plaque de compactage et, par chauffage de l'empilement, afin d'atteindre au moins la température de fusion de la résine tout en laissant infusible et lisse le film, et faisant échapper le(s) gaz présent(s) dans l'empilement par l'ouverture puis, par au moins un canal débouchant ménagé dans la plaque de compactage et/ou dans le marbre et/ou dans les cales de tablage.

Ainsi, on réalise, à l'aide de moyens usuels, tels que les presses de formage utilisées ultérieurement pour le formage définitif du flan en pièce, un flan compacté sans porosité remplie d'air et/ou de gaz. En particulier, aucune opération coûteuse de détourage des bords de flan n'est nécessaire.

Le procédé objet de l'invention permet de garantir les qualités géométriques du flan. On précise ici et dans le cadre de l'invention qu'un flan est un produit intermédiaire ou semi-fini de caractéristiques géométriques définies et destiné à être formé ultérieurement, typiquement en étant embouti. Ceci est assuré d'une part en garantissant un contact de l'empilement de tissus pré-imprégné avec les éléments de calibrage (marbre, cales de tablage et plaque de compactage) tout au long du processus de fabrication, et d'autre part en s'assurant que le contact avec ces différents éléments soit toujours réalisé au travers d'un film lisse, d'aspect glacé, de manière à répondre à la contrainte d'état de surface et ce durant toutes les phases de fabrication. Ainsi, la variation de volume de l'empilement est très bien contrôlée durant la fabrication selon l'invention.

Dans le contexte de l'invention, ce volume occupé par l'empilement peut varier sous l'effet des trois phénomènes suivantes :
- le foisonnement, qui implique que l'empilement « sec » de tissu pré-imprégnés occupe une épaisseur beaucoup plus importante que son épaisseur finale, environ le double de l'épaisseur finale compactée,
- la fusion de la résine, qui s'accompagne d'une augmentation de volume de ladite résine,
- le retrait lors du refroidissement.

Ensuite, dans le cadre de l'invention, on cherche à assurer l'absence de porosités, dans le matériau compacté par :
- éjection de l'air et/ou gaz contenu(s) dans l'empilement,
- absence d'expulsion de résine (essorage) durant la phase de compactage lorsque la résine est en fusion.

L'invention permet :
- d'assurer le passage des gaz de l'empilement vers l'extérieur de l'outillage (pour les évacuer),
- de contenir de manière étanche la résine dans l'empilement,
- de maintenir le contact avec les élément de calibrage que sont le marbre, les cales de tablage et la plaque de compactage durant tout le cycle de compactage pour garantir la qualité géométrique du flan.

Pour mettre en oeuvre l'invention, on pourra utiliser avantageusement un outillage constitué pour la partie mobile d'une plaque de compactage, de préférence de section épaisse et peu déformable, permettant ainsi une répartition uniforme de la pression fournie par la presse dans lequel est inséré l'outillage sur la surface de l'empilement à compacter.

On peut également utiliser un marbre plan ou présentant des plages de hauteur variable en cas de réalisation d'un flan à épaisseur évolutive.

Des cales de tablage peuvent être fixées sur les pourtours de ce marbre, et être pourvues, le cas échéant, de rainures, de manière à assurer le drainage et l'évacuation de l'air et/ou du(es) gaz contenu(s) à l'intérieur de l'empilement au cours du pressage. Ces cales de tablage permettent à la fois de calibrer l'épaisseur de la plaque réalisée par le procédé et, par ailleurs, en combinaison avec l'effet du film selon l'invention, de supprimer le fluage latéral de la résine au cours de l'opération de compactage. Lors de la mise en place de l'empilement sur le marbre, le film enveloppant l'empilement entre en contact avec toutes les cales de tablage.

L'outillage de fabrication, destiné à la mise en oeuvre du procédé selon l'invention, pourra être avantageusement inséré dans une presse hydraulique simple ou double effet, capable de fournir une force de fermeture correspondant à une pression d'au moins 1Mpa répartie sur l'ensemble de l'empilement à traiter.

La presse est de préférence équipée de plateaux chauffants, chauffés par exemple par de l'huile bouillante, et/ou par des résistance électriques, et/ou par induction ou tout autre moyen approprié apte à transmettre leur température à l'outillage, lui même placé sur ces plateaux chauffants. Dans une solution alternative, sans sortir du cadre de l'invention, l'outillage peut être chauffé directement par les mêmes moyens que ceux évoqués à propos des plateaux chauffants.

Le film utilisé selon l'invention étant, de préférence, posé sur le marbre, l'empilement à compacter est initialement posé sur celui-ci. Les bords du film sont alors rabattus sur l'empilement et maintenu en cette position aux quatre coins, de préférence par de l'adhésif haute température, de manière à former quatre éléments formant des pinces.

Au moins une feuille de film est alors glissée sous les pinces de manière à recouvrir la surface supérieure de l'empilement.

Ce film forme une interface entre le marbre, la plaque de compactage et l'empilement. Il évite ainsi tout collage de résine sur ces éléments en cours de compactage. Par ailleurs, comme le film présente une surface très lisse (glacée), il permet d'améliorer considérablement l'état de surface du flan, l'état de surface tant de la plaque de compactage que du marbre n'étant pas « imprimé » dans ce cas sur la surface du flan.

Ainsi, l'aspect glacé des films utilisés selon l'invention situés au contact de la surface de l'empilement durant l'étape de consolidation, permet avantageusement d'obtenir un état de surface extrêmement satisfaisant pour le flan obtenu, et tout à fait compatible avec les fortes exigences de qualité de surface rencontrées dans certains domaines, tels que celui de l'aéronautique.

Par ailleurs, le film autorise également avantageusement un excellent drainage des gaz durant l'étape de consolidation.

Cela s'explique par la possible évacuation de l'air et/ou des gaz se trouvant initialement au sein de l'empilement, à travers la (es) zone(s) de chevauchement formant ouverture du film enveloppant l'empilement à compacter. Le dégazage opéré s'avère ainsi satisfaisant, et permet d'aboutir à un flan présentant un taux de porosité réduit, lui assurant des propriétés de résistance mécanique globale particulièrement performantes.

A cette fin, en fonction de la dimension surfacique de l'empilement, il peut être avantageux de créer d'autres zones de chevauchement en multipliant les feuilles de film se chevauchant. Ainsi, le film supérieur peut avantageusement être séparé en deux ou plusieurs parties ou feuilles présentant des zones de recouvrements, de même que le film placé en zone inférieure peut également être constitué de deux ou plusieurs parties ou feuilles. La multiplication des zones de chevauchement qui constituent des zones de moindre étanchéité est particulièrement avantageuse pour la mise en oeuvre du procédé objet de l'invention, notamment pour la constitution de flans de surface importante.

L'enveloppement du flan à compacter par le film permet en outre de conserver toute la résine à l'intérieur de l'empilement. En effet, les zones de recouvrement du film, bien que permettant à l'air et/ou aux gaz de s'échapper de l'empilement pendant la mise sous pression de celui-ci, ne permettent pas à la résine de « s'échapper », car celle ci présente une viscosité trop élevée pour s'écouler à travers les ouvertures de recouvrement, ouvertures par ailleurs refermées par l'intermédiaire de la pression.

Ainsi, par l'utilisation du film enveloppant l'empilement et des cales de tablage, le ratio entre le volume de fibres et entre le volume de résine dans l'empilement est constant durant tout le processus de compactage. On évite ainsi l'apparition du phénomène d'essorage résultant de l'expulsion de la résine de l'empilement au cours du processus.

Le film lisse utilisé est dans un mode de réalisation préféré de l'invention un film polyimide.

Selon un mode de réalisation avantageux, on réalise l'étape b) du procédé en disposant des cales de tablage fixes par rapport au marbre et en découpant l'empilement de tissus aux dimensions correspondantes à celles entre les cales de tablage.

L'invention concerne également un outillage, destiné à la fabrication d'un flan en matériau composite à fibres continues.

Selon l'invention, l'outillage comprend un marbre, une plaque de compactage, des cales de tablage et au moins un canal débouchant ménagé dans le marbre et/ou dans la plaque de compactage et/ou dans les cales de tablage.

Un tel canal permet ainsi avantageusement le passage des gaz de l'empilement vers l'extérieur de l'outillage (pour les évacuer).

L'invention concerne également une presse hydraulique (P), destinée à la fabrication de flans en matériau composite à fibres continues, la presse étant équipée de plateaux chauffant, adaptés à la fusion de la résine thermoplastique du matériau composite, et comprenant un outillage tel que décrit précédemment inséré entre les plateaux.

Une application particulièrement avantageuse du procédé selon l'invention est la fabrication de flans en matériau composite utilisés en tant que pièces de structure d'aéronef.

### BRÈVE DESCRIPTION DES DESSINS

D'autres avantages et caractéristiques ressortiront mieux à la lecture de la description détaillée faite en référence aux figures qui représentent respectivement :
- Figure 1 : une représentation schématique d'une presse selon l'invention (P), destinée à la fabrication de flans en matériau composite à fibres continues, dans laquelle un outillage 1 est placé entre des plateaux chauffants supérieur et inférieur.
- Figure 2 : une vue d'un outillage 1 selon l'invention pour la réalisation d'un flan non rectangulaire et présentant par ailleurs une épaisseur évolutive, les plages A,B,C,D et E du marbre 12 selon l'invention étant de hauteur différente.
- Figures 3 et 3A : des vues de dessus et en coupe d'un empilement de tissus de fibres pré-imprégné 20 d'une résine thermoplastique avec un film 21,22 lisse selon l'invention placé dans l'outillage de la figure 2 ;
- Figure 3B : une vue de détail des cales de tablage (14) utilisées selon l'invention.
- Figure 4A et 4B : deux vues de dessus montrant les étapes d'enveloppement d'un empilement (20) par un film conformément à l'invention pour la fabrication de flan parallélépipédique.
- Figure 4C : une vue en coupe de l'empilement enveloppé selon les figures 4A et 4B.
- Figures 4D à 4F : des vues en coupe de différents modes d'enveloppement de l'empilement selon l'invention, autres que celui de la figure 4C.
- Figures 5 et 5A : des vues respectivement en vue de dessus et en coupe selon A-A d'un flan réalisé selon l'invention.

### EXPOSÉ DÉTAILLÉ DE MODES DE RÉALISATION PARTICULIERS

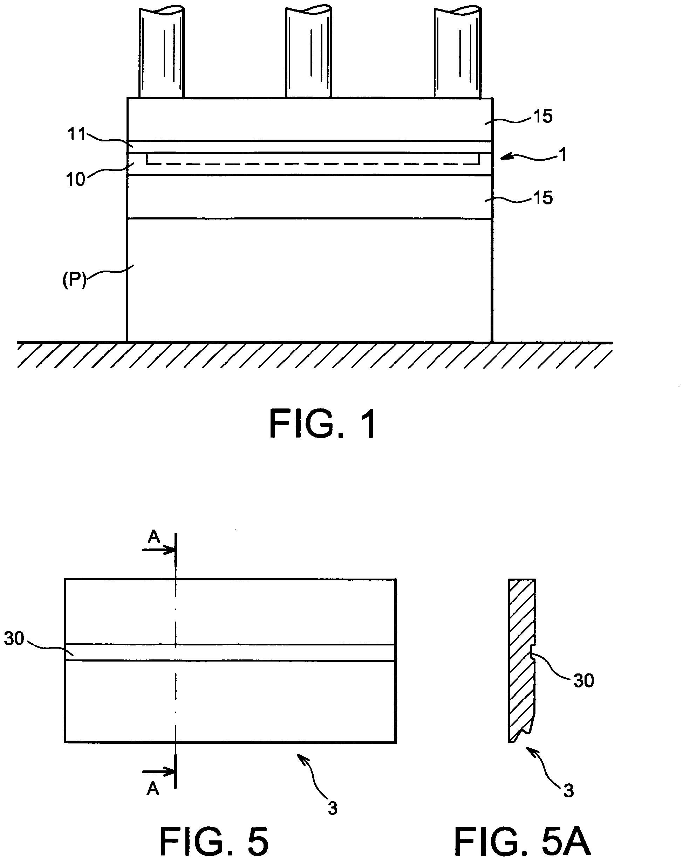

En référence à la figure 1, une presse hydraulique selon l'invention (P) comprend tout d'abord un outillage de compactage 1 constitué de deux parties, une partie inférieure 10 supportant un marbre 12 et des cales de tablage 14 et une partie supérieure 11 supportant une plaque de compactage 13.

Les deux parties 10, 11 sont mobiles l'une par rapport à l'autre en translation selon l'axe Z de la figure 1 et fixes selon les autres degrés de liberté par des moyens classiquement utilisés pour les outillages travaillant sous presse et connus de l'homme du métier.

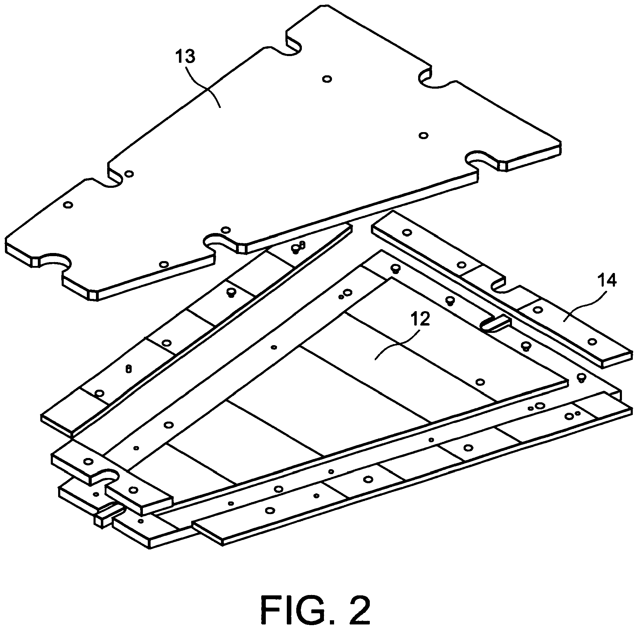

En référence à la figure 2, les cales de tablage 14 d'épaisseur appropriée, sont disposées et assemblées dans la partie inférieure 11 de l'outillage par vissage (trous de fixation 41) sur le pourtour du marbre 12.

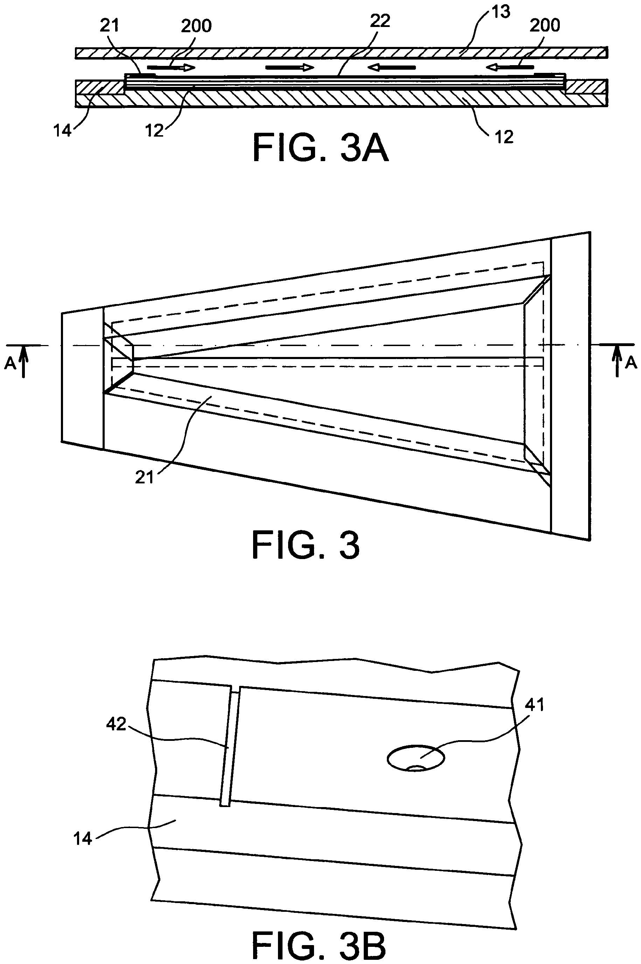

La Figure 3B montre leur mode de fixation dans le marbre 12 par l'intermédiaire de vis se logeant dans les logements 41.

D'une manière usuelle, l'outillage 1, le marbre 12, les cales de tablage 14 et la plaque de compactage 13 sont réalisés par exemple en acier d'outillage de type 40CMD8.

Sur la figure 3A est représentée une variante avantageuse du positionnement des tables de calage 14 par rapport au marbre 12 : afin d'obtenir les effets désirés, la hauteur de saillie e entre les cales de tablage 14 et le marbre 12 est de préférence proportionnelle au nombre de plis de l'empilement 20. Typiquement cette hauteur e est exprimée, en millimètres, par la formule 0,005xN où N est le nombre de plis présents dans l'empilement 20. Ainsi pour 20 plis la hauteur de saillie e est au moins égale à 0,1 mm.

L'ensemble de l'outillage 1 est de préférence au préalable, dégraissé à l'aide d'un solvant approprié.

Une partie 21 de film 2, par exemple un film polyimide, est alors disposée sur le marbre 12, après avoir été découpée à la forme désirée. Cette partie 21 est avantageusement enduite d'agent démoulant, par exemple de type FREEKOTE 44NC de la société LOCTITE.

Les films polyimides utilisés pour la mise en oeuvre de l'invention peuvent être réalisés, par exemple, par réaction entre un dianydride tétracarboxylique aromatique et une diamine aromatique. L'épaisseur de ces films peut par exemple être de l'ordre de 30 µm, et de façon plus générale être comprise entre environ 20 et 50 µm.

A titre indicatif, les films suivants, disponibles dans le commerce, peuvent être utilisés :
- FILM Thermalimide 50 microns de la société AIRTECH^{®}.
- FILM Thermalimide 50 microns de la société RICHMOND^{®} (Réf : UHT750).
- FILM Thermalimide 50 microns de la société KANEKA^{®} (Réf : 200AV).

De manière générale, du fait de la faible épaisseur de ces films polyimides, les ouvertures ou zones de chevauchement/recouvrement de ces derniers ne laissent apparaître par impression que des marques superficielles sur la surface de l'empilement après la consolidation de celui-ci, ces marques ne dégradant aucunement l'état de surface, et n'affaiblissant pas significativement les caractéristiques mécaniques globales du flan obtenu.

Les films polyimides employés, par exemple de type « thermalimides », sont choisis pour résister aux températures élevées mises en oeuvre durant l'étape de consolidation de l'empilement, pouvant atteindre 400°C ou plus. Ces films thermalimides ne devant pas être intégrés à la plaque finale issue du flan selon l'invention, ils sont donc prévus pour pouvoir être facilement retirés de la surface supérieure de l'empilement compacté ou de la plaque de compactage, par exemple par pelage. Dans le cas, le plus souvent rencontré, où les films utilisés n'adhèrent ni à la surface supérieure de l'empilement compacté ni à la plaque de compactage en fin d'étape de consolidation, le retrait de ces films polyimides ne pose bien évidemment aucun souci particulier.

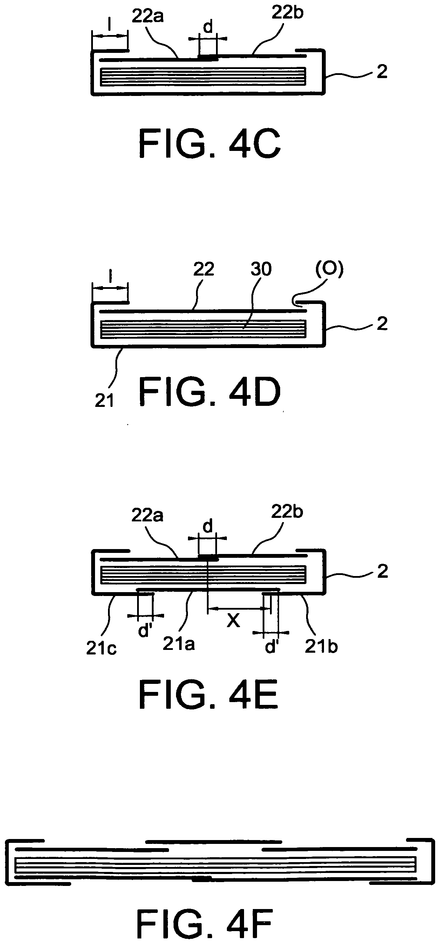

Ainsi, on peut distinguer, sur les figures 3 et 3A, le premier enveloppement de l'empilement des tissus 20 à l'aide du film thermalimide 21 disposé dans l'outillage 1,12,13 avant et ensuite rabattu sur ces tissus 20 avant d'installer la feuille 22 en partie supérieure (en vis à vis de la plaque 13). La partie supérieure du film 2 peut être constituée d'une seule feuille 22 mais sera avantageusement réalisée avec deux 22a, 22b (figure 4C) ou plusieurs feuilles se recouvrant sur une largeur d comprise entre 10mm et 20mm, de préférence égale à 15mm. La solution mettant en oeuvre deux ou plusieurs feuilles présente l'avantage d'assurer un meilleur dégazage et plus de possibilités de glissement des feuilles de film les unes sur les autres.

Un empilement 20 de tissus pré-imprégnés est découpé au format approprié et disposé sur le film 2 de sorte que les tissus 20 viennent en contact sans jeu avec les cales de tablage 14 sur tout le pourtour, c'est-à-dire en contact latéral.

L'empilement de tissus selon l'invention pourra par exemple consister en des tissus de fibre de carbone T300J de masse surface de 285g/m² imprégnés de résine PPS (Polyphénylsulfone) de type CD0286. Le même procédé pourra être mis en oeuvre avec tout type de tissu, carbone, verre ou aramide ou combinaison de tissus, pré-imprégné de tout type de résine thermoplastique telle que PPS, PEEK ou PEI.

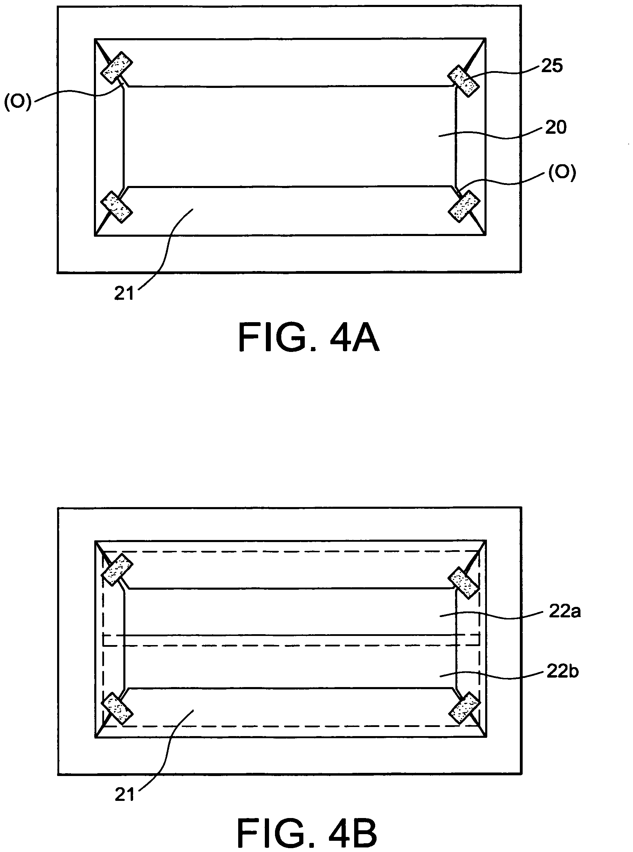

Les bords de la partie 21 du film 2 sont alors rabattus sur l'empilement 20 et stabilisés dans cette position par la pose d'adhésives hautes températures 25 conformément à la figure 4A.

Un opérateur glisse alors deux bandes ou feuilles 22a et 22b préalablement enduites d'agent démoulant sous les rabats ainsi réalisés comme présenté figure 4B. Le recouvrement 1 entre les rabats et les bords des bandes ou feuilles 22a et 22b est d'au moins 15 mm.

L'empilement étant réalisé, le film peut avantageusement être rabattu sur les bords et, de préférence, fixé par un adhésif haute température. Un mode de fixation aux quatre coins de l'empilement est montré à la figure 5 formant ainsi quatre « pinces » (une en chaque coin).

Selon un mode de réalisation particulier, un opérateur peut installer ensuite au moins un thermocouple, non représenté, au contact de l'empilement 20 ainsi enrobé en le passant par une rainure 42 ménagée dans des cales de tablage 14 (figure 3B). Ce thermocouple, en contact avec l'empilement 20, va permettre d'asservir de manière précise le cycle de pression-température permettant le compactage.

La partie supérieure 11 de l'outillage 1 supportant la plaque de compactage 13 est placée et mise en référence sur la partie inférieure 10, l'ensemble est alors transféré sous la presse (P). Sous l'effet du poids de l'outillage supérieur 11 d'abord puis de la pression hydraulique initialement appliquée par la presse (P), le foisonnement de l'empilement 20 est fortement réduit et la plaque de compactage 13 vient en contact avec les cales de tablage 14, avec une force augmentée.

Durant ce déplacement, une grande partie de l'air et/ou des gaz initialement contenu(s) dans l'empilement 20 est évacuée, pouvant s'échapper de l'enrobage par les zones de recouvrement formant ouverture (O) entre les parties de film.

La nature indéformable du film, la disposition particulière au moment de l'enveloppement et le faible coefficient de frottement d'une partie 21 du film 2 sur l'autre 22 ainsi que du film 2 sur l'empilement 20 et sur l'acier permettent aux rabats de glisser selon les flèches 200 présentées figure 3A, c'est-à-dire parallèlement au plan défini par la surface supérieure de l'empilement 20. Ainsi l'empilement 20 reste toujours entouré par le film 2, ce dernier ne se plissant pas durant ce « pré-compactage ».

L'outillage 1 ayant été placé à l'intérieur de la presse (P), il entre en contact avec les plateaux chauffant 15 et monte progressivement en température jusqu'à atteindre la température de fusion de la résine (typiquement 310°C pour une résine PPS). Cette phase de montée en température est contrôlée par l'intermédiaire du thermocouple placé au contact de l'empilement. Durant toute cette phase de montée en température une pression de pré-compactage est appliquée à l'empilement 20, typiquement une pression de 2 bars, la plaque de compactage 13 restant en contact avec les cales de tablage 14. L'action conjuguée de la température et de cette pression entraîne une évacuation des gaz de l'empilement 20 qui peuvent s'échapper d'abord de l'empilement 20 par l'intermédiaire des ouvertures (O) délimitées par les recouvrements ou chevauchements de film 2, puis de l'outillage 1, par l'intermédiaire des rainures 42 pratiquées dans les cales de tablage 14. Ces rainures 42 ont ainsi pour effet de faciliter l'évacuation des gaz et permettre l'introduction de thermocouples de contrôle. De préférence, les rainures 42 présentent une largeur comprise entre 1 et 3 mm pour une profondeur comprise entre 2 et 3 mm.

Une fois la température de fusion atteinte, la pression est augmentée jusqu'à une valeur plus importante, typiquement 10 bars, la température étant maintenue constante. On observe alors un palier en température et en pression pendant une dizaine de minutes.

La fusion de la résine s'accompagne d'une augmentation de volume de celle-ci.

La hauteur (e) de saillie des cales de tablage 14 par rapport au marbre 12 étant inférieure à l'épaisseur finale de l'empilement 20 compacté, celui-ci étant lui même entouré d'un film 2 de faible épaisseur (par exemple à 0,1 1 mm=2 x 50µm), cette pression est intégralement appliquée à l'empilement 20 et tend à éjecter la résine hors de l'empilement 20.

Or, celle-ci ne peut pas être expulsée de l'empilement : elle vient « buter » contre les cales de tablage 14 de sorte qu'elle ne peut être expulsée que dans la direction Z. Mais, la pression hydrostatique à l'intérieur de « la poche » créée par l'enrobage de film 2 (indéformable) tend à « fermer » les recouvrements de film 2, la zone de recouvrement centrale (d) et sur les bords (1) agissant alors comme des chicanes et maintenant la résine à l'intérieur de la poche.

Ainsi, grâce à l'enveloppement de l'empilement 20 par le film 2 avec recouvrement, la présence des cales de tablage 14 et le contrôle du cycle pression-température, on garantit un faible taux de porosités en autorisant l'évacuation des gaz pendant la phase de pré-compactage, puis en retenant la résine à l'intérieur de la poche lors du compactage final tout en lui appliquant une importante pression de compactage. Cette pression de compactage peut être avantageusement d'au moins 1 MPa sur l'ensemble de l'empilement à traiter.

A l'issue de ce palier de 10 minutes, l'ensemble est refroidi lentement, la vitesse de refroidissement étant au plus de 50°C/minute et idéalement située aux environs de 10°C/minute jusqu'à une température de l'ordre de 170°C (résine PPS) en maintenant la pression de 10 bars. L'outillage 1 est alors ouvert pour procéder au démoulage du flan ainsi compacté.

La température de démoulage est en fait choisie dans une plage comprise entre 50 et 60 % de la température de fusion (exprimée en degrés Celsius), c'est à dire à une température supérieure à la température à laquelle se produit le phénomène de retrait.

Les Figures 4D à 4F montrent différents exemples de multiplication du nombre de feuilles de film thermalimide de manière à couvrir une surface plus importante d'empilement, en pratiquant des zones de recouvrement (O) aptes à évacuer les gaz. Les zones de recouvrement (O) en partie supérieure et inférieure doivent de préférence être décalées d'une distance X. La distance X doit être au moins égale à 2d, d étant la largeur du recouvrement, idéalement située autour de 15mm. Dans la pratique, la distance X sera le plus souvent égale à la largeur standard des feuilles de film 2, soit 250 mm.

Les zones de recouvrement ainsi créées ont pour but de ne pas provoquer de zones de faiblesse mécanique dans le flan ainsi fabriqué.

En effet, il se peut que la tolérance d'épaisseur exigée pour le flan soit supérieure à l'épaisseur du film 2. Par exemple, typiquement la tolérance exigée pour le flan peut être de l'ordre de 0,01 mm (+/- 0,005 mm) tandis que l'épaisseur du film de l'ordre de 50µm. Or, chaque zone de recouvrement créée selon l'invention laisse une marque sous la forme d'une bande en creux d'une profondeur égale à l'épaisseur du film. Ainsi, dans le mode de recouvrement, on ne peut se permettre d'avoir deux bandes en creux de part et d'autre de l'épaisseur du flan et en regard l'une de l'autre, car en procédant de la sorte, la tolérance d'épaisseur exigée pour le flan ne serait pas respectée.

Les figures 5 et 5A montrent un exemple de marque ou empreinte 30 laissée par un recouvrement de film sur une des surfaces du flan 3 (typiquement d'une profondeur de l'ordre de 50 µm).

Le procédé proposé permet d'obtenir les mêmes résultats qu'un autoclave alors que la pression est assurée par des vérins d'une presse et en l'absence d'application de vide.

Par ailleurs, alors que dans l'art antérieur la plaque de compactage est en contact direct avec l'empilement, imprimant ainsi son état de surface propre au niveau du contact, le présent procédé utilise l'interposition d'un film entre la plaque de compactage, la base de l'outillage et l'empilement de manière à obtenir un état de surface parfait des plaques, ce film étant disposé de telle manière à ce qu'il ne nuise pas au dégazage.

En outre, contrairement à d'autres procédés connus de l'art antérieur, le procédé objet de l'invention permet d'éviter le fluage de la résine, garantissant ainsi une meilleure santé matière (absence de phénomène « d'essorage »).

L'invention permet d'obtenir des flans en composites thermoplastique à renfort fibreux sous forme de fibres continues, présentant des caractéristiques géométriques telles que :
- ceux-ci puissent être mis en forme par estampage à chaud directement après fabrication sans opération d'usinage complémentaire,
- et présentent des caractéristiques de santé matière et de qualité de surface compatibles avec des exigences aéronautiques (Ra<0,8µm, taux de porosités <1 % en volume).

Finalement, grâce à l'invention, il est possible de réaliser des flans de surface plane, d'épaisseur constante ou évolutive, destinés ou non à un estampage ultérieur, et permettant de répondre à des spécifications de qualité de type « aéronautique » soit :
- un taux de fibres présentes dans le flan de 60 % ou plus,
- une tolérance moyenne de planéité de 1mm/mètre, la tolérance de planéité globale dépendant en pratique de la dimension du flan à fabriquer,
- une tolérance de parallélisme entre les faces ou les plages d'épaisseur et la face plane de 0.015 mm,
- un état de surface présentant une rugosité maximale de Ra<0,8 µm,
- un taux de porosité inférieure à 1 % en volume.

Il va de soi que, si dans les modes de réalisation illustrés l'enveloppement de l'empilement par le film se fait par insertion préalable d'une partie du film sur le marbre, il peut tout aussi bien être réalisé séparément et au préalable, l'ensemble constitué par le film enveloppant complètement l'empilement de tissus étant alors posé sur le marbre.

## Revendications

1. Procédé de fabrication d'un flan en matériau composite thermoplastique pour une opération de formage ultérieure dans lequel on réalise les étapes suivantes :
a) on enveloppe un empilement de tissus de fibres continues pré-imprégné (20) d'une résine thermoplastique, avec un film (2, 21,22) lisse en laissant au moins une ouverture (O),
b) on dispose à la périphérie d'un marbre (12), des cales de tablage (14), et on place l'empilement de tissus sur le marbre (12) de manière à mettre en contact le film (2) enveloppant avec les cales de tablage (14),
c) on place une plaque de compactage (13) au dessus de l'empilement de tissus (20), enveloppé du film (2) et placé sur le marbre (12),
d) on applique un cycle de pression et de température, par pression sur le dessus de la plaque de compactage et, par chauffage de l'empilement, afin d'atteindre au moins la température de fusion de la résine, tout en laissant infusible et lisse le film, et en faisant échapper le(s) gaz présent(s) dans l'empilement, par l'ouverture (O) puis par au moins un canal débouchant (42) ménagé dans la plaque de compactage (13) et/ou dans le marbre (12) et/ou dans les cales de tablage (14), procédé dans lequel on réalise l'enveloppement de l'empilement à partir d'un film constitué d'au moins deux parties (21,22) disposées de sorte que l'une des parties (21) inférieure soit disposée entre l'empilement (20) et le marbre (12) en se prolongeant sur les bords de l'empilement et en étant rabattue sur une zone de l'empilement (20), l'autre des parties (22) supérieure étant glissée sous les rabats (210) de la partie inférieure (21).

2. Procédé de fabrication selon la revendication 1 dans lequel les rabats (210) de la partie inférieure(21) ont une largeur 1 d'au moins 15 mm.

3. Procédé de fabrication selon l'une des revendications 1 ou 2, dans lequel la partie supérieure (22) est constituée d'au moins deux feuilles (22a) et (22b) présentant une zone de recouvrement de largeur d comprise entre 10 et 20 mm.

4. Procédé de fabrication selon l'une des revendications 1 à 3, dans lequel la partie inférieure (21) est constituée d'au moins deux feuilles (21a, 21b, 21c) présentant une zone de recouvrement de largeur d' comprise entre 10 et 20 mm.

5. Procédé de fabrication selon la revendication 3 en combinaison avec la revendication 4, dans lequel la zone de recouvrement entre deux feuilles inférieures (21a,21b,21c) est décalée latéralement d'une distance X au moins égale à 2d, par rapport à la zone de recouvrement entre deux feuilles supérieures (22a,22b).

6. Procédé de fabrication selon l'une des revendications précédentes, dans lequel un thermocouple est introduit au contact de l'empilement, l'information de température délivrée par le thermocouple étant utilisée pour piloter le cycle de compactage.

7. Procédé de fabrication selon l'une quelconque des revendications précédentes dans lequel on réalise un cycle de chauffage jusqu'à la température de fusion de la résine sous une pression initiale d'au moins 2 bars, suivi d'un palier d'au moins 10 minutes à la température de fusion sous une pression de compactage d'au moins 10 bars suivi d'un refroidissement lent à moins de 50°C par minute sous la pression de compactage jusqu'à une température de démoulage du flan comprise entre 50 et 60 % de la température de fusion en degrés Celsius.

8. Outillage (1) de fabrication d'un flan en matériau composite à fibres continues, comprenant un marbre (12), une plaque de compactage (13), des cales de tablage (14) et au moins un canal débouchant (42) ménagé dans le marbre (12) et/ou dans la plaque de compactage (13) et/ou dans les cales de tablage (14), outillage dans lequel les cales de tablage (14) sont en saillie par rapport au marbre (12), la hauteur de saillie e entre les cales de tablage (14) et le marbre (12) étant choisie, en millimètres, au moins égale à 0,005xN avec N étant le nombre de plis dans l'empilement.

9. Presse hydraulique (P), destinée à la fabrication de flans en matériau composite à fibres continues, la presse étant équipée de plateaux chauffant (15), adaptés à la fusion de la résine thermoplastique du matériau composite, et comprenant un outillage selon la revendication 8 inséré entre les plateaux (15).

10. Application du procédé selon l'une des revendications 1 à 7 pour fabriquer des flans en matériau composite utilisés en tant que pièces de structure d'aéronef.

## Claims

1. Method of manufacturing a blank made from thermoplastic composite material for a subsequent forming operation, in which the following steps are carried out:
a) a stack (20) of fabrics composed of continuous fibres which is pre-impregnated with a thermoplastic resign is enveloped with a smooth film (2, 21, 22), leaving at least one opening (O),
b) fixing blocks (14) are arranged at the periphery of a board (12) and the stack of fabrics is placed onto the board (12) so as to bring the enveloping film (2) into contact with the fixing blocks (14),
c) a compacting plate (13) is placed on top of the stack of fabrics (20) enveloped by the film (2) and placed onto the board (12),
d) a pressure and temperature cycle is applied, by pressing on top of the compacting plate and by heating the stack so as to reach at least the melting temperature of the resin while leaving the film infusible and smooth, and allowing the gas(es) present in the stack to escape through the opening (O) and then through at least one emerging channel (42) formed in the compacting plate (13) and/or in the board (12) and/or in the fixing blocks (14), in which method the stack is enveloped using a film consisting of at least two parts (21, 22) arranged so that the lower one of the parts (21) is arranged between the stack (20) and the board (12) while being extended along the edges of the stack and folded over a zone of the stack (20), the other, upper one of the parts (22) being slid below the flaps (210) of the lower part (21).

2. Manufacturing method according to claim 1, in which the flaps (210) of the lower part (21) have a width 1 of at least 15 mm.

3. Manufacturing method according to one of claims 1 or 2, in which the upper part (22) consists of at least two sheets (22a) and (22b) having an overlap zone with a width d of between 10 and 20 mm.

4. Manufacturing method according to one of claims 1 to 3, in which the lower part (21) consists of at least two sheets (21a, 21b, 21c) having an overlap zone with a width d' of between 10 and 20 mm.

5. Manufacturing method according to claim 3 in combination with claim 4, in which the overlap zone between two lower sheets (21a, 21b, 21c) is offset laterally by a distance X at least equal to 2d relative to the overlap zone between two upper sheets (22a, 22b).

6. Manufacturing method according to one of the preceding claims, in which a thermocouple is brought into contact with the stack, the temperature information delivered by the thermocouple being used to control the compacting cycle.

7. Manufacturing method according to any one of the preceding claims, in which a heating cycle is carried out up to the melting temperature of the resin at an initial pressure of at least 2 bar, followed by a holding stage at the melting temperature for at least 10 minutes at a compacting pressure of at least 10 bar, followed by a slow cooling at less than 50°C per minute at the compacting pressure until a blank demoulding temperature of between 50 and 60% of the melting temperature in degrees Celsius is reached.

8. Tool (1) for manufacturing a blank made from composite material composed of continuous fibres, comprising a board (12), a compacting plate (13), fixing blocks (14) and at least one emerging channel (42) formed in the board (12) and/or in the compacting plate (13) and/or in the fixing blocks (14), in which tool the fixing blocks (14) project relative to the board (12), the projection height e between the fixing blocks (14) and the board (12) being selected to be, in millimetres, at least equal to 0.005xN, N being the number of plies in the stack.

9. Hydraulic press (P), intended for manufacturing blanks made from composite material composed of continuous fibres, the press being equipped with heating plates (15) suitable for melting the thermoplastic resin of the composite material, and comprising a tool according to claim 8 inserted between the plates (15).

10. Use of the method according to one of claims 1 to 7 for manufacturing blanks made from composite material which are used as structural aircraft parts.

## Patentansprüche

1. Verfahren zur Herstellung eines Rohlings aus einem thermoplastischen Verbundmaterial für einen weiteren Formgebungsvorgang, wobei die folgenden Schritte durchgeführt werden:
a) Einhüllen eines Stapels von Endlosfasergeweben (20), der mit einem thermoplastischen Harz vorimprägniert ist, mit einem glatten Film bzw. einer Folie (2, 21, 22), wobei mindestens eine Öffnung (O) gelassen wird,
b) Anbringen von Plattenpassstücken (14) an der Peripherie einer Arbeitsplatte (12) und Platzieren des Stapels von Geweben auf der Arbeitsplatte (12) derart, dass die einhüllende Folie (2) mit den Plattenpassstücken (14) in Kontakt gebracht wird,
c) Platzieren einer Kompaktierungsplatte (13) oberhalb des Stapels von Geweben (20), der von der Folie (2) eingehüllt ist und auf der Arbeitsplatte (12) platziert ist,
d) Anwenden eines Druck- und Temperaturzyklus durch Druck von oben auf die Kompaktierungsplatte und durch Erhitzen des Stapels, um mindestens die Schmelztemperatur des Harzes zu erreichen, während die Folie unschmelzbar und glatt bleibt und das Gas bzw. die Gase, die in einem Stapel vorhanden sind, durch die Öffnung (O) und dann über mindestens einen Öffnungskanal (42), der in der Kompaktierungsplatte (13) und/oder in der Arbeitsplatte (12) und/oder in den Plattenpassstücken (14) angelegt ist, entweichen können,
wobei in diesem Verfahren das Einhüllen des Stapels ausgehend von einer Folie durchgeführt wird, die aus mindestens zwei Bereichen (21, 22) besteht, die derart angeordnet sind, dass der eine untere Bereich (21) zwischen dem Stapel (20) und dem Arbeitstisch (12) angeordnet ist, wobei er sich über die Ränder des Stapels erstreckt und über eine Zone des Stapels (20) umgeschlagen ist, und der andere obere Bereich (22) unter die umschlagklappen (210) des unteren Bereichs (21) geschoben ist.

2. Verfahren zur Herstellung nach Anspruch 1, wobei die Umschlagklappen (210) des unteren Bereichs (21) eine Breite von mindestens 15 mm aufweisen.

3. Verfahren zur Herstellung nach einem der Ansprüche 1 oder 2, wobei der untere Bereich (22) aus mindestens zwei Blättern (22a) und (22b) besteht, die eine Überdeckungszone einer Breite d, die zwischen 10 und 20 mm liegt, aufweisen.

4. Verfahren zur Herstellung nach einem der Ansprüche 1 bis 3, wobei der untere Bereich (21) aus mindestens zwei Blättern (21a, 21b, 21c) besteht, die eine Überdeckungszone einer Breite d', die zwischen 10 und 20 mm liegt, aufweisen.

5. Verfahren zur Herstellung nach Anspruch 3 in Kombination mit Anspruch 4, wobei die Überdeckungszone zwischen zwei unteren Blättern (21a, 21b, 21c) in Bezug auf die Überdeckungszone zwischen zwei oberen Blättern (22a, 22b) seitlich um eine Strecke X von mindestens gleich 2d versetzt ist.

6. Verfahren zur Herstellung nach einem der vorhergehenden Ansprüche, wobei ein Thermoelement zum Kontakt mit dem Stapel eingeführt wird, wobei die durch das Thermoelement gelieferte Temperaturinformation zur Steuerung des Kompaktierungszyklus verwendet wird.

7. Verfahren zur Herstellung nach einem der vorhergehenden Ansprüche, wobei ein Heizzyklus bis zur Schmelztemperatur des Harzes unter einem Anfangsdruck von mindestens 2 bar, gefolgt von einer Phase von mindestens 10 min bei der Schmelztemperatur unter einem Kompaktierungsdruck von mindestens 10 bar, gefolgt von einem langsamen Abkühlen mit weniger als 50°C pro Minute unter dem Kompaktierungsdruck bis zu einer Temperatur des Herausnehmens des Rohlings aus der Form, die zwischen 50 und 60 % der Schmelztemperatur in Grad Celsius liegt, durchgeführt wird.

8. Einrichtung (1) zur Herstellung eines Rohlings aus einem Verbundmaterial mit Endlosfasern, umfassend eine Arbeitsplatte (12), eine Kompaktierungsplatte (13), Plattenpassstücke (14) und mindestens einen Öffnungskanal (42), der in der Arbeitsplatte (12) und/oder der Kompaktierungsplatte (13) und/oder den Plattenpassstücken (14) angelegt ist, wobei in dieser Einrichtung die Plattenpassstücke (14) in Bezug auf die Arbeitsplatte (12) vorspringen, die Höhe des Vorsprungs e zwischen den Plattenpassstücken (14) und der Arbeitsplatte (12) - in mm - als mindestens gleich 0,005 x N, wobei N die Zahl der Faltenlagen in dem Stapel ist, gewählt ist.

9. Hydraulische Presse (P) zur Herstellung von Rohlingen aus einem Verbundmaterial mit Endlosfasern, wobei die Presse mit Heizplatten (15) ausgestattet ist, die zum Schmelzen des thermoplastischen Harzes des Verbundmaterials angepasst sind, und eine Einrichtung nach Anspruch 8, die zwischen die Platten (15) eingefügt ist, umfasst.

10. Anwendung des Verfahrens nach einem der Ansprüche 1 bis 7 zur Herstellung von Rohlingen aus einem Verbundmaterial, die als Strukturteile eines Luftfahrzeugs verwendet werden.
